## Europäisches Patentamt

## European Patent Office

## Office européen des brevets

(11) Publication number: **0 126 504**
**A1**

# EUROPEAN PATENT APPLICATION

(21) Application number: **84200573.8**

(22) Date of filing: **19.04.84**

(51) Int. Cl.³: **B 62 D 63/06**

(30) Priority: **20.04.83 GB 8310681**

(43) Date of publication of application: **28.11.84**
**Bulletin 84/48**

(84) Designated Contracting States: **AT BE CH DE FR GB IT LI LU NL SE**

(71) Applicant: **Smethurst, Michael Ernest, Healy Masham, North Yorkshire HG4 4LL (GB)**

(72) Inventor: **Smethurst, Michael Ernest, Healy Masham, North Yorkshire HG4 4LL (GB)**

(74) Representative: **Noz, Franciscus Xaverius, Ir. et al, Algemeen Octrooibureau P.O. Box 645, NL-5600 AP Eindhoven (NL)**

(54) **Improvements in trailers.**

(57) Trailer including a load receiving platform and two wheels being movable with respect to the platform by means of pivotable wheel mounts between a first position where the wheels project below the platform and a second position wherein the wheels do not project below the platform.

An adjustable tow bar has been coupled with the wheel mounts by means of a linkage.

EP 0 126 504 A1

0126504

-1-

IMPROVEMENTS IN TRAILERS

This invention relates to improvements in trailers.The improvement relates to several forms of trailer including agricultural trailers and breakdown trailers.

According to this invention a trailer includes a load receiving platform, and two wheels mounted on wheel mounts, the wheel mounts being arranged for movement with respect to the load receiving platform from a first position where the wheels project downwardly below the load receiving platform to a second position where the wheels do not project downwardly below the load receiving platform.

Thus with the wheels movable with respect to the load receiving platform the relative upward movement of the wheels with respect to the load receiving platform causes the load receiving platform to be lowered to the ground for esasy loading. This is especially useful for loading animals or bales of hay or even a broken down vehicle.

Preferably each wheel mount comprises a flat plate pivotally mounted on the edge of the load receiving platform to cause the wheel to move in an upwards or downwards direction.

Preferably the movement of the wheels is effected by a hydraulic cylinder connected to each wheel mounting plate.

Preferably the towbar is also movable so that it can be moved from a towing position where it projects beneath the load receiving platform to a loading position where it does not project below the load receiving platform. Preferably the movement of the towbar is effected by the same means effecting movement of the wheel mounts.

A particularly useful embodiment of this invention makes use of a trapezium linkage to effect this movement.

The wheel mounting plate is pivotally connected to the load receiving platform and is also pivotally connected to a longitudinal rod which extends along the length of the load receiving platform. An end rod is pivotally connected to both the load receiving platform and the auxiliary rod. Thus the line between the pivotal connection of the wheel mount with the load receiving platform and the auxiliary road, the load receiving platform, the auxiliary rod and the end rod form a trapezium linkage. The wheel mount is connected to a hydraulic cylinder which effects the movement of the wheel mount. The towbar is rigidly connected to the end rod and the angle between them is kept fixed. Thus when the hydraulic cylinder is fully extended the wheel is in its lowered position for transportation and the towbar is also extending below the load receiving platform. When the hydraulic cylinder is fully retracted the mounting plate is rotated backwards thus moving the wheel to a position where it does not project below the load receiving platform and automatically moving the end rod in the same direction thus pulling the towbar to a position where it clears the ground. The trailer may also have side plates which serve to support any load on the load receiving platform.

Preferably the hydraulic cylinders which control the movement of the wheel mounting plates are connected to a control panel in an auxiliary vehicle which pulls the trailer so that loading of the load receiving platform can be effected from the vehicle pulling the trailer.

An example of a trailer in accordance with this invention will now be described with reference to the accompanying drawings, in which: -

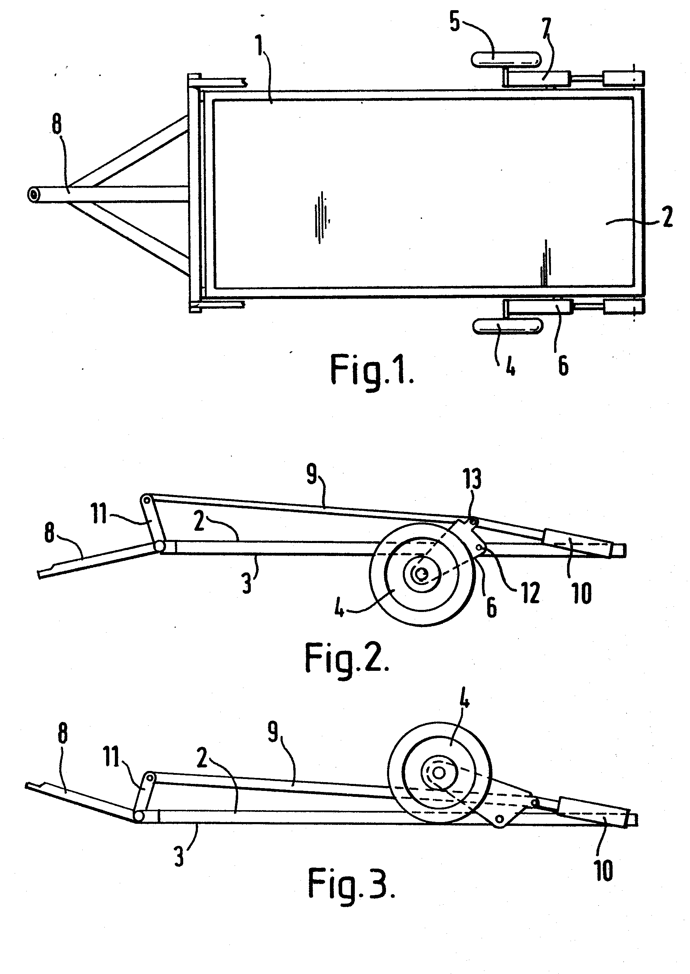

Figure 1 is a plan view of a trailer;

Figure 2 is a schematic side elevation of the trailer in its first transport position; and

Figure 3 is a schematic side elevation of the trailer in its second loading position.

Trailer 1 comprises a flat load receiving platform 2 with a flat base 3. It has two wheels 4 and 5 mounted on mounting plates 6 and 7. Movement of wheel 4 and wheel mount 6 will only be described in detail, movement of wheel 5 being exactly the same. The trailer 1 is towed by means of a towbar 8.

Wheel mount 6 is a triangular plate pivotally mounted on the load receiving platform and pivotally mounted to an auxiliary rod 9. It is also pivotally connected to a hydraulic cylinder 10 which effects movement of the wheel mount and the wheel with respect to the load receiving platform 2. Auxiliary rod 9 is also pivotally connected to an end rod 11 which is pivotally connected to the load receiving platform 2. The towbar 8 is rigidly connected to the end rod 11 and the angle between them is kept constant.

In the trailer's first transport position the hydraulic cylinder 10 is fully extended and the wheel 4 extends below the base 3 of the load receiving platform 2 and freely rotates. The towbar 8 also extends below the base 3 of the load receiving platform for towing. When the trailer 1 is to be loaded the hydraulic cylinder 10 is fully retracted thus rotating the wheel mount 6 and moving the wheel 4 to a position where it does not extend below the base 3 of the load receiving platform 2. Since end rod 11 is linked to the line between the pivotal connections 12 and 13 by the load receiving platform and the auxiliary rod 9 in a trapezium linkage, it is also rotated backwards thus pulling the towbar 8 upwards and to a position where it clears the ground. The base 3 of the load receiving platform is then flat on the ground allowing easy loading of the trailer 1.

The hydraulic cylinder 10 is hydraulically connected to the vehicle pulling the trailer and can be controlled from that vehicle.

The figures used in the claims are only meant to explain more clearly the intention of the invention and are not supposed to be any restriction concerning the interpretation of the invention.

Claims

1.    A trailer including a load receiving platform,and two wheels mounted on wheel mounts,characterised in that the wheel mounts are arranged for movement with respect to the load receiving platform from a first position where the wheels project  downwardly below the load receiving platform to a second position where the wheels do not project downwardly below the load receiving platform.

2.    A trailer according claim 1,characterised in that each wheel mount comprises a flat plate pivotally mounted on the edge of the load receiving platform to cause the wheel to move in an upwards or downwards direction.

3.    A trailer according claim 1 or 2, characterised in that a hydraulic cylinder has been connected to each wheel mounting plate,for effecting the movement of the wheels.

4.    A trailer as claimed in any preceding claim characterised in that a towbar of the trailer is also movable with respect to the platform so that it can be moved from a towing position where it projects beneath the load receiving platform to a loading position where it does not project below the load receiving platform.

5.    A trailer as claimed in claim 4 characterised in that the wheel mounting plate is pivotally connected to the load receiving platform and is also pivotally connected to a longitudinal rod which extends along the length of the load receiving platform,and an end rod is pivotally connected to both the load receiving platform and the longitudinal rod, whilst the towbar is rigidly connected to the end rod and the angle between them is kept fixed.

0126504

1/1

Fig.1.

Fig.2.

Fig.3.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | GB-A- 882 502 (G. FRANCOIS) * Figures 1-4 * | 1-4 | B 62 D 63/06 |
| X | GB-A- 805 043 (SENTINEL LTD.) * Figures 1, 4 * | 1 | |
| X | EP-A-0 040 513 (INSTITUTE FOR INDUSTRIAL RESEARCH AND STANDARDS) * Figures 1, 2 * | 1,4 | |
| A | US-A-2 420 794 (C.J. O'NEILL) | 5 | |

TECHNICAL FIELDS
SEARCHED (Int. Cl. ³)

B 60 P 1/00
B 62 D 49/00
B 62 D 53/00
B 62 D 63/00

The present search report has been drawn up for all claims

| Place of search | Date of completion of the search | Examiner |
|---|---|---|
| BERLIN | 04-07-1984 | BARNY DE ROMANET P.M |